# FASCICULE DE BREVET EUROPEEN

(11) **EP 3 838 543 B1**
(45) Date de publication et mention de la délivrance du brevet: **16.04.2025**
(21) Numéro de dépôt: 20215181.7
(22) Date de dépôt: 17.12.2020
(51) Int. Cl.: B29C 43/36, B29C 37/00, B29C 43/02, B29C 44/34, B60N 2/80, B29C 44/06, B29C 44/08, B29C 44/44, B60N 2/70, B29K 75/00, B29K 267/00, B29C 43/18, B29C 44/12, B29K 105/04, B29K 705/00, B29L 31/30

(54) **PROCÉDÉ DE RÉALISATION D'UN COUSSIN POUR ÉLÉMENT DE SIÈGE DE VÉHICULE AUTOMOBILE**
VERFAHREN ZUR HERSTELLUNG EINES KISSENS FÜR EIN KRAFTFAHRZEUG-SITZELEMENT
METHOD FOR MANUFACTURING A CUSHION FOR SEAT ELEMENT OF A MOTOR VEHICLE

(30) Priorité: 19.12.2019 FR 1914925
(43) Date de publication de la demande: 23.06.2021
(73) Titulaire: TESCA France, 75008 Paris (FR)
(72) Inventeur: SOY, Albert, 17170 Amer (ES)
(74) Mandataire: Sayettat, Julien Christian

(56) Documents cités:
- EP-A1- 3 012 083
- CN-A- 104 441 389
- US-A1- 2005 072 433
- US-A1- 2012 064 320

## Description

L'invention concerne un procédé de réalisation d'un coussin pour élément de siège de véhicule automobile, un coussin réalisé par un tel procédé et un élément comprenant un tel coussin.

Le document US-2005/0072433 décrit un appui-tête pour siège de véhicule automobile dont le bloc de rembourrage est issu de l'injection dans un moule d'un mélange précurseur de mousse de polyuréthanne souple.

Il est également connu de mettre en œuvre un procédé de réalisation d'un coussin pour élément de siège de véhicule automobile, ledit procédé comprenant les étapes suivantes :
- prévoir un moule comprenant une cuve et un couvercle définissant une cavité de moulage,
- mélanger des particules de mousse élastiquement compressible et/ou des fibres issues de recyclage avec un mélange précurseur de résine de polyuréthanne souple de liaison desdites particules et/ou fibres entre elles, de manière à obtenir un mélange pour former un bloc de rembourrage dudit coussin,
- remplir ledit moule avec ledit mélange et le comprimer pour lui conférer la forme de ladite cavité de moulage,
- après réticulation de ladite résine, démouler ledit bloc de rembourrage obtenu.

Avec une telle façon de procéder, on obtient un bloc de rembourrage présentant une surface fragile et irrégulière pouvant générer un inconfort pour le passager du siège, et ceci malgré l'adjonction d'une coiffe de revêtement dudit bloc pour former le coussin.

Pour résoudre ce problème, il est connu de revêtir le bloc d'une couche de protection disposée entre la coiffe et le bloc, ladite couche étant par exemple à base de non tissé ou de film plastique, mais une telle façon de procéder est source de surcoûts importants.

L'invention a pour but de pallier cet inconvénient.

A cet effet, et selon un premier aspect, l'invention propose un procédé de réalisation d'un coussin pour élément de siège de véhicule automobile, ledit procédé comprenant les étapes suivantes :
- prévoir un moule comprenant une cuve et un couvercle définissant une cavité de moulage,
- mélanger des particules de mousse élastiquement compressible et/ou des fibres issues de recyclage avec un mélange précurseur de résine de polyuréthanne souple de liaison desdites particules et/ou fibres entre elles, de manière à obtenir un mélange pour former un bloc de rembourrage dudit coussin,
- enduire les parois de ladite cavité d'une pellicule à base d'un mélange précurseur de résine de polyuréthanne souple,
- remplir ledit moule avec ledit mélange et le comprimer pour lui conférer la forme de ladite cavité de moulage,
- après réticulation desdites résines, démouler ledit bloc de rembourrage obtenu.

Dans cette description, les termes de positionnement dans l'espace (haut, supérieur, latéral, avant, ...) sont pris en référence à un élément disposé en configuration d'utilisation dans le véhicule.

Avec l'agencement proposé, le bloc présente en sa surface une couche de lissage en résine de polyuréthanne souple issue de la pellicule, ceci permettant de conférer audit bloc une meilleure robustesse et un confort amélioré.

Et le fait de réaliser la couche de lissage de cette façon permet, en particulier quand ladite couche est de même formulation que la résine de liaison des particules et/ou fibres, selon une réalisation que l'on verra plus loin, d'obtenir le résultat escompté à moindre coût.

Selon d'autres aspects, l'invention propose un coussin réalisé par un tel procédé.

D'autres particularités et avantages de l'invention apparaîtront dans la description qui suit, faite en référence aux figures jointes, dans lesquelles :
- la figure 1 est une vue schématique en perspective éclatée d'un moule de réalisation d'un coussin, selon une réalisation, et d'un élément sous forme d'appui-tête comprenant un tel coussin ;
- les figures 2a et 2b sont des vues schématiques en perspective d'une armature d'un élément sous forme d'appui-tête selon une réalisation (figure 2a) et selon une variante (figure 2b) ;
- les figures 3a, 3b, 3c et 3d sont des vues en coupe schématiques de différentes étapes du procédé de réalisation d'un coussin avec surmoulage d'une armature selon la figure 2a, à savoir une étape de mélange (figure 3a), une étape d'enduction des parois de la cavité du moule (figure 3b), une étape de remplissage du moule avec le mélange (figure 3c) et la compression dudit mélange pour réaliser le moulage (figure 3d) ;
- la figure 4 correspond à la figure 3d dans le cas de l'armature présentée en figure 2b ;
- la figure 5a correspond à la figure 3d dans le cas où le bloc de rembourrage ne surmoule pas une armature ;
- la figure 5b est une vue schématique en coupe d'un coussin ainsi obtenu intégré à un élément sous forme d'appui-tête ;
- la figure 6 est une vue de détail schématique en coupe d'un coussin réalisé par un procédé selon l'invention, le mélange représenté étant à base de particules de mousse ;
- la figure 7 est une vue en coupe schématique d'une opération optionnelle additionnelle du procédé correspondant au surmoulage du bloc de rembourrage par une couche de mousse de confort, l'étape représentée visualisant ladite couche en fin de formation juste avant l'opération de démoulage.

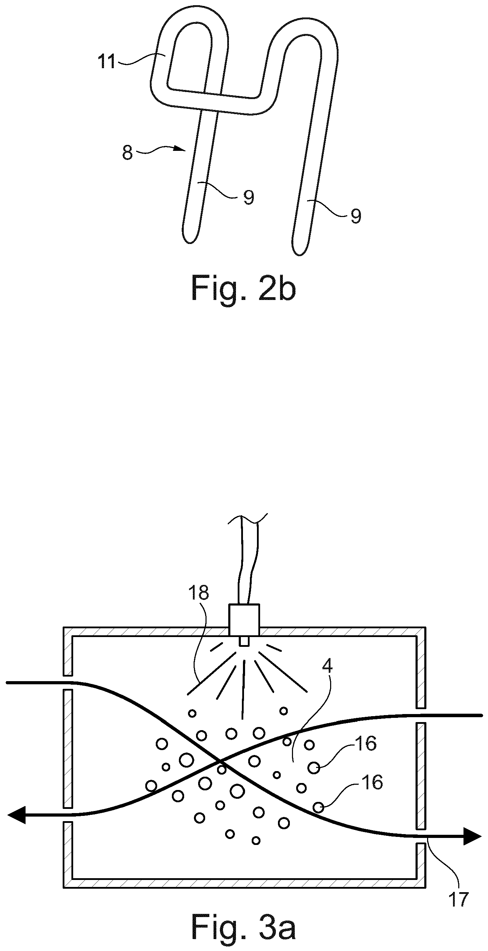

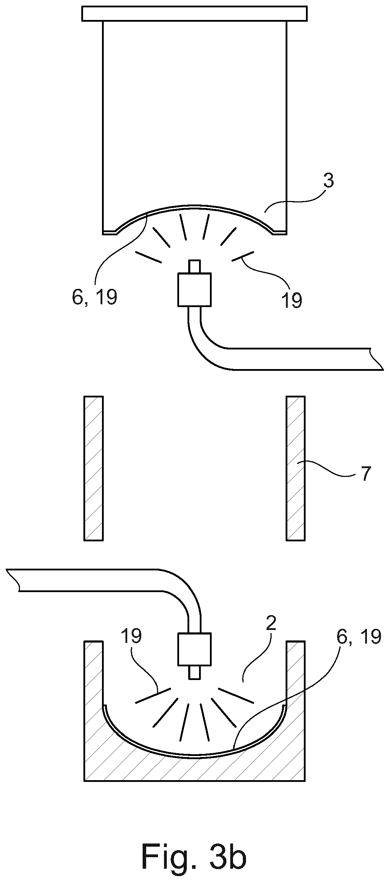

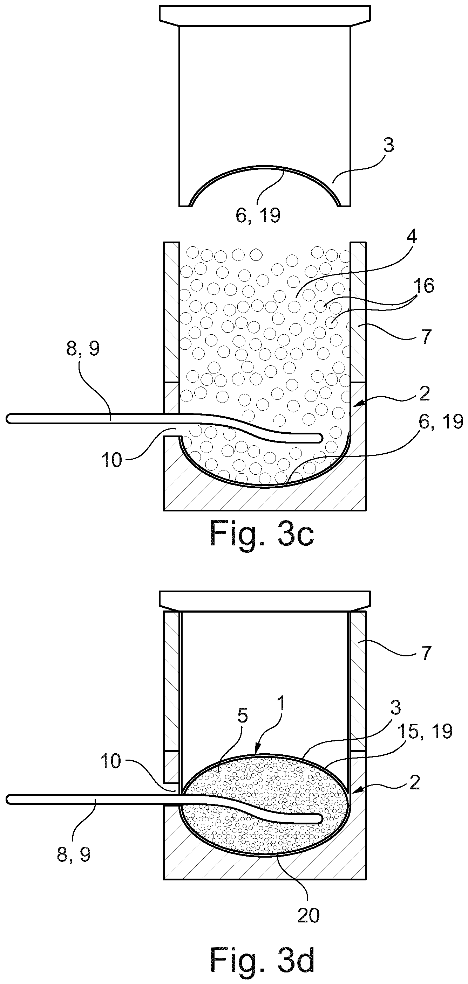

En référence aux figures, on décrit un procédé de réalisation d'un coussin 20 pour élément 1 - par exemple sous forme d'appui-tête, d'accoudoir, d'assise ou de dossier - de siège de véhicule automobile, ledit procédé comprenant les étapes suivantes :
- prévoir un moule comprenant une cuve 2 et un couvercle 3 définissant une cavité de moulage,
- mélanger des particules 16 de mousse - notamment de polyuréthanne - élastiquement compressible et/ou des fibres - notamment de polyester - issues de recyclage avec un mélange précurseur 18 de résine de polyuréthanne souple de liaison desdites particules et/ou fibres entre elles, de manière à obtenir un mélange 4 pour former un bloc 5 de rembourrage dudit coussin (figure 3a),
- enduire les parois 6 de ladite cavité d'une pellicule à base d'un mélange précurseur de résine de polyuréthanne souple 19 (figure 3b),
- remplir ledit moule avec ledit mélange (figure 3c) et le comprimer (figure 3d) pour lui conférer la forme de ladite cavité de moulage,
- après réticulation desdites résines, démouler ledit bloc de rembourrage obtenu.

Selon un mode de réalisation représenté sur la figure 3a, le mélange est notamment réalisé par un jet d'air 17.

Selon un mode de réalisation, la pellicule présente une épaisseur inférieure à 150 microns.

Selon un mode de réalisation, l'enduction des parois 6 par la pellicule est précédée de l'application d'un agent de démoulage sur lesdites parois.

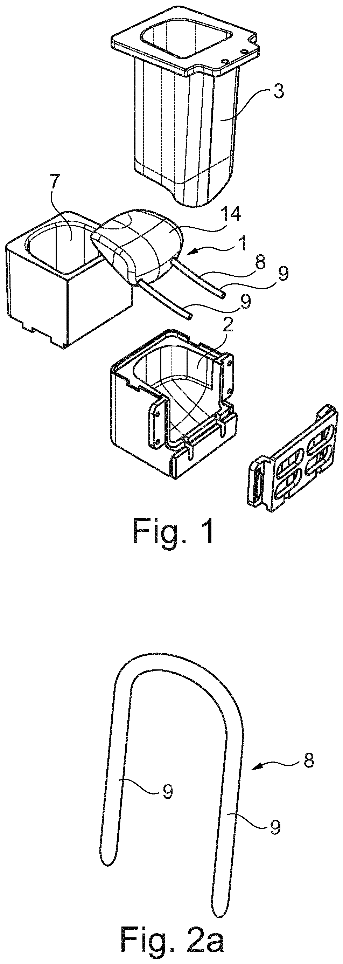

Selon la réalisation illustrée notamment en figure 1, la cuve 2 est pourvue d'une cheminée 7 surplombant son ouverture - ladite cheminée étant ici séparable de ladite cuve, ou monobloc avec ladite cuve en variante non représentée -, ladite cheminée présentant une section agencée pour que le couvercle 3 puisse être introduit dedans et y coulisser jusqu'à une position de moulage (figures 3d, 4 et 5a) définissant la cavité de moulage, le remplissage du moule avec le mélange 4 étant réalisé de sorte que ledit mélange occupe ladite cuve et ladite cheminée (figure 3c), ledit couvercle étant ensuite actionné jusqu'à ladite position de moulage de manière à comprimer ledit mélange pour lui conférer la forme de ladite cavité.

Selon un mode de réalisation, les mélanges précurseurs de résine de polyuréthanne souple 18,19 pour effectuer la liaison des particules 16 et/ou fibres entre elles et pour enduire les parois 6 de la cavité de moulage sont identiques, lesdits mélanges étant appliqués par pulvérisation au moyen d'un pulvérisateur commun, ce qui permet de simplifier la mise en œuvre et baisser les coûts de production.

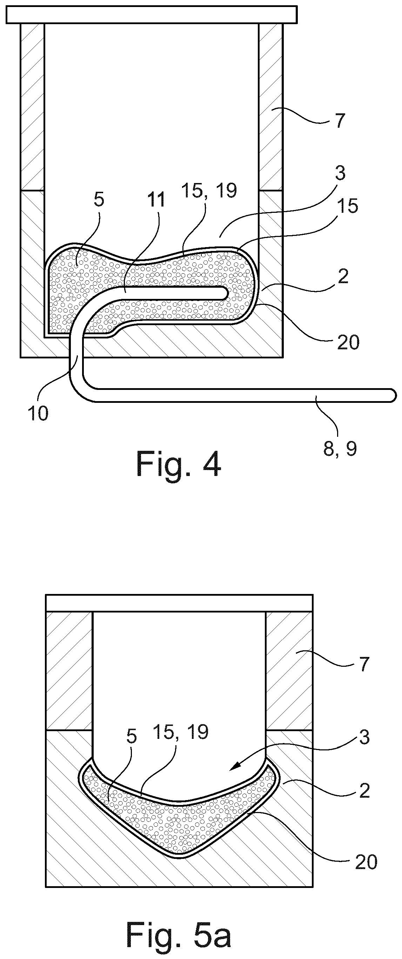

Selon les réalisations illustrées en figures 3 et 4, le procédé comprend en outre, préalablement au remplissage du moule par le mélange 4, une étape de positionnement dans la cuve 2 d'au moins une partie d'une armature 8 d'élément 1, de manière à permettre un surmoulage de ladite armature par le bloc 5.

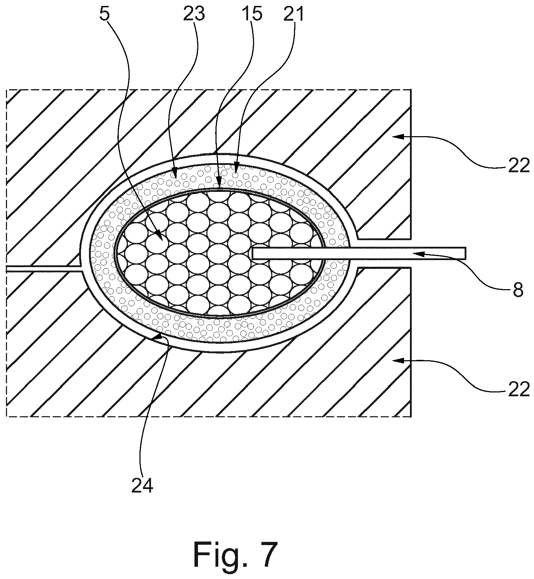

Comme illustré en figure 7, le procédé peut comprendre en outre les étapes suivantes :
- disposer le bloc 5 pourvu d'une armature 8 dans un moule de moulage par injection réaction 22, ladite armature prenant appui sur ledit moule une fois fermé de manière à définir un espace 23 entre ledit bloc et la paroi interne 24 dudit moule,
- injecter dans ledit espace un mélange précurseur de mousse de polyuréthanne élastiquement compressible de manière à former, après expansion dudit mélange, une couche de mousse de confort 21 - et de protection éventuelle contre des odeurs pouvant être issues dudit bloc - surmoulant ledit bloc,
- démouler l'ensemble obtenu.

On notera que la présence de la couche de lissage 15 permet d'éviter une pénétration de la mousse de la couche de confort 21 dans le bloc 5, sachant qu'une telle pénétration aurait pu entraîner la formation d'une croûte raide et étanche nuisant au confort hygrothermique et tactile du coussin 20.

En outre, la présence de la couche de lissage 15 permet de favoriser le glissement, et donc la bonne répartition autour du bloc 5, du mélange précurseur de mousse destiné à former la couche de confort 21.

Dans les cas représentés, c'est la partie supérieure d'une armature 8 tubulaire métallique d'appui-tête 1 qui est positionnée dans la cuve 2.

L'armature 8 représentée est repliée en forme générale de U renversé (voir notamment les figures 2a et 2b), les branches 9 du U passant ici à travers des orifices 10 pour être hors de la cuve 2, de sorte que le bloc 5 de rembourrage une fois formé surmoule le haut de ladite armature.

Dans le cas d'une armature 8 correspondant à la figure 2b, la partie centrale du U est repliée de sensiblement un demi-tour vers l'avant, de sorte que ladite armature présente en vue latérale une forme générale de J renversé, le bloc 5 de rembourrage surmoulant la partie avant 11 de ladite armature.

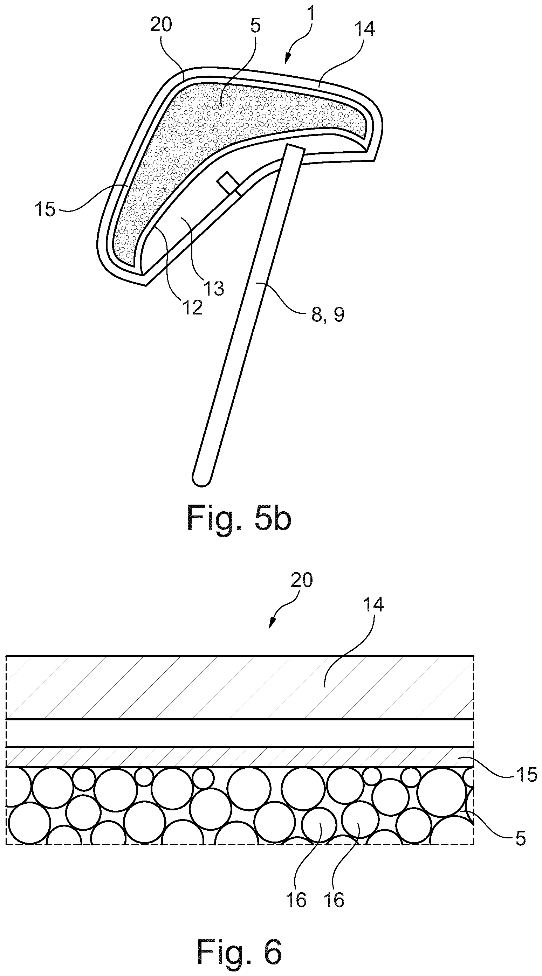

En figures 5 est illustré le cas d'un bloc 5 ne réalisant pas de surmoulage, ledit bloc étant destiné à être monté en recouvrement d'au moins la face avant 12 d'un boitier 13 d'absorption d'énergie en matériau plastique moulé, ledit boitier étant solidaire d'une armature 8 métallique d'appui-tête 1 (voir la figure 5b).

On décrit à présent un coussin 20 pour élément 1 de siège de véhicule automobile réalisé par un tel procédé, ledit coussin comprenant :
- un bloc 5 de rembourrage moulé à base d'un mélange de particules 16 de mousse - notamment de polyuréthanne - élastiquement compressible et/ou de fibres - notamment de polyester - issues de recyclage, lesdites particules et/ou fibres étant liées entre elles par une résine de polyuréthanne souple, ledit bloc présentant en sa surface une couche de lissage 15 en résine de polyuréthanne souple,
- une coiffe 14 de matériau de revêtement chaussée sur ledit bloc - ladite coiffe étant par exemple à base de textile ou de cuir.

Selon une réalisation, le bloc 5 peut être surmoulé par une couche de mousse de confort 21.

Dans ce cas, et selon une réalisation, la couche de mousse de confort 21 présente une épaisseur minimale de 20 mm en zone d'appui du passager sur le coussin 20.

On décrit enfin un élément 1 de siège de véhicule automobile - par exemple sous forme d'appui-tête, d'accoudoir, d'assise ou de dossier - ledit élément comprenant un coussin 20 et une armature 8 associée audit coussin.

Le coussin 20 peut notamment être associé par surmoulage de l'armature 8 par le bloc 5, ou encore par montage dudit bloc sur ladite armature, notamment par l'intermédiaire d'un boitier 13.

## Revendications

1. Procédé de réalisation d'un coussin (20) pour élément (1) de siège de véhicule automobile, ledit procédé comprenant les étapes suivantes :
• prévoir un moule comprenant une cuve (2) et un couvercle (3) définissant une cavité de moulage,
• mélanger des particules (16) de mousse élastiquement compressible et/ou des fibres issues de recyclage avec un mélange précurseur (18) de résine de polyuréthanne souple de liaison desdites particules et/ou fibres entre elles, de manière à obtenir un mélange (4) pour former un bloc (5) de rembourrage dudit coussin,
• enduire les parois (6) de ladite cavité d'une pellicule à base d'un mélange précurseur de résine de polyuréthanne souple (19),
• remplir ledit moule avec ledit mélange pour former un bloc (5) de rembourrage et le comprimer pour lui conférer la forme de ladite cavité de moulage,
• après réticulation desdites résines, démouler ledit bloc de rembourrage obtenu.

2. Procédé selon la revendication 1, **caractérisé en ce que** la cuve (2) est pourvue d'une cheminée (7) surplombant son ouverture, ladite cheminée présentant une section agencée pour que le couvercle (3) puisse être introduit dedans et y coulisser jusqu'à une position de moulage définissant la cavité de moulage, le remplissage du moule avec le mélange (4) étant réalisé de sorte que ledit mélange occupe ladite cuve et ladite cheminée, ledit couvercle étant ensuite actionné jusqu'à ladite position de moulage de manière à comprimer ledit mélange pour lui conférer la forme de ladite cavité.

3. Procédé selon l'une des revendications 1 ou 2, **caractérisé en ce que** les mélanges précurseurs (18,19) de résine de polyuréthanne souple pour effectuer la liaison des particules (16) et/ou fibres entre elles et pour enduire les parois (6) de la cavité de moulage sont identiques, lesdits mélanges étant appliqués par pulvérisation au moyen d'un pulvérisateur commun.

4. Procédé selon l'une quelconque des revendications 1 à 3, **caractérisé en ce qu'**il comprend en outre, préalablement au remplissage du moule par le mélange (4), une étape de positionnement dans la cuve (2) d'au moins une partie d'une armature (8) d'élément (1), de manière à permettre un surmoulage de ladite armature par le bloc (5).

5. Procédé selon la revendication 4, **caractérisé en ce qu'**il comprend en outre les étapes suivantes :
• disposer le bloc (5) pourvu d'une armature (8) dans un moule de moulage par injection réaction (22), ladite armature prenant appui sur ledit moule une fois fermé de manière à définir un espace (23) entre ledit bloc et la paroi interne (24) dudit moule,
• injecter dans ledit espace un mélange précurseur de mousse de polyuréthanne élastiquement compressible de manière à former, après expansion dudit mélange, une couche de mousse de confort (21) surmoulant ledit bloc,
• démouler l'ensemble obtenu.

6. Coussin (20) réalisé par un procédé selon l'une quelconque des revendications précédentes, ledit coussin comprenant :
• un bloc (5) de rembourrage moulé à base d'un mélange de particules (16) de mousse élastiquement compressible et/ou de fibres issues de recyclage, lesdites particules et/ou fibres étant liées entre elles par une résine de polyuréthanne souple, ledit bloc présentant en sa surface une couche de lissage (15) en résine de polyuréthanne souple,
• une coiffe (14) de matériau de revêtement chaussée sur ledit bloc.

## Patentansprüche

1. Verfahren zur Herstellung eines Kissens (20) für ein Element (1) eines Kraftfahrzeugsitzes, das Verfahren umfassend die folgenden Schritte:
• Bereitstellen einer Form, umfassend eine Wanne (2) und einen Deckel (3), die einen Formhohlraum definieren,
• Mischen von Partikeln (16) aus elastisch komprimierbarem Schaum und/oder Fasern aus Recycling mit einem Vorläufergemisch (18) aus weichem Polyurethanharz zum Verbinden der Partikel und/oder Fasern miteinander, um ein Gemisch (4) zu erlangen, um einen Polsterblock (5) des Kissens zu bilden,
• Beschichten der Wände (6) des Hohlraums mit einem Film basierend auf einem weichen Polyurethanharzvorläufergemisch (19),
• Füllen der Form mit dem Gemisch, um einen Polsterblock (5) zu bilden, und diesen Komprimieren, um ihm die Form des Formhohlraums zu verleihen,
• nach Vernetzen der Harze, Entformen des erlangten Polsterblocks.

2. Verfahren nach Anspruch 1, **dadurch gekennzeichnet, dass** die Wanne (2) mit einem Schacht (7) versehen ist, der über seiner Öffnung liegt, wobei der Schacht einen Querschnitt aufweist, der ausgebildet ist, damit der Deckel (3) darin eingeführt werden kann und darin bis zu einer Formposition zu gleiten, die den Formhohlraum definiert, wobei das Füllen der Form mit dem Gemisch (4) derart durchgeführt wird, dass das Gemisch die Wanne und den Schacht einnimmt, wobei der Deckel danach bis zu der Formposition betätigt wird, um das Gemisch zu komprimieren, um ihm die Form des Hohlraums zu verleihen.

3. Verfahren nach einem der Ansprüche 1 oder 2, **dadurch gekennzeichnet, dass** die Vorläufergemische (18, 19) aus weichem Polyurethanharz, um die Bindung von Partikeln (16) und/oder Fasern untereinander zu bewirken und um die Wände (6) des Formhohlraums zu beschichten, identisch sind, wobei die Gemische durch Sprühen mittels eines gemeinsamen Sprühgeräts aufgebracht werden.

4. Verfahren nach einem der Ansprüche 1 bis 3, **dadurch gekennzeichnet, dass** es ferner vor dem Füllen der Form mit dem Gemisch (4) einen Schritt zum Positionieren mindestens eines Teil einer Armierung (8) des Elements (1) in der Wanne (2) umfasst, um ein Überformen der Armierung durch den Block (5) zu ermöglichen.

5. Verfahren nach Anspruch 4, **dadurch gekennzeichnet, dass** es ferner die folgenden Schritte umfasst:
• Anordnen des mit einer Armierung (8) versehenen Blocks (5) in einer Reaktionsspritzgussform (22), wobei sich die Armierung auf der Form abstützt, wenn sie geschlossen ist, sodass ein Raum (23) zwischen dem Block und der Innenwand (24) der Form definiert wird,
• Einspritzen eines Vorläufergemisch aus elastisch komprimierbarem Polyurethanschaum in den Raum, um nach Expansion des Gemischs eine Schicht aus Komfortschaum (21) zu bilden, die den Block überformt,
• Entformen der erlangten Einheit.

6. Kissen (20), das durch ein Verfahren nach einem der vorhergehenden Ansprüche hergestellt wird, das Kissen umfassend:
• einen Polsterblock (5), der basierend auf einem Partikelgemisch (16) aus elastisch komprimierbarem Schaum und/oder Fasern aus Recycling geformt ist, wobei die Partikel und/oder Fasern durch ein weiches Polyurethanharz miteinander verbunden sind, wobei der Block auf seiner Oberfläche eine Glättungsschicht (15) aus weichem Polyurethanharz aufweist,
• eine Kappe (14) aus Straßenbelagmaterial, die über den Block gezogen wird.

## Claims

1. A method for manufacturing a cushion (20) for a seat element (1) of a motor vehicle, said method comprising the following steps:
- providing a mold comprising a tank (2) and a cover (3) defining a molding cavity,
- mixing elastically compressible foam particles (16) and/or recycled fibers with a precursor mixture (18) of flexible polyurethane resin for binding said particles and/or fibers together, so as to obtain a mixture (4) for forming a padding block (5) for said cushion,
- coating the walls (6) of said cavity with a film based on a precursor mixture of flexible polyurethane resin (19),
- filling said mold with said mixture so as to form a padding block (5) and compress it to give it the shape of said molding cavity,
- after cross-linking said resins, demoulding said resulting padding block.

2. Method according to claim 1, **characterized in that** the tank (2) is provided with a chimney (7) overhanging its opening, said chimney having a section arranged so that the cover (3) can be introduced therein and slide therein to a molding position defining the molding cavity, the filling of the mold with the mixture (4) being performed so that said mixture occupies said tank and said chimney, said cover then being actuated to said molding position so as to compress said mixture to give it the shape of said cavity.

3. Method according to one of claims 1 or 2, **characterized in that** the precursor mixtures (18, 19) of flexible polyurethane resin for bonding the particles (16) and/or fibers together and for coating the walls (6) of the molding cavity are identical, said mixtures being applied by spraying using a common sprayer.

4. Method according to any one of claims 1 to 3, **characterized in that** it further comprises, prior to filling the mold with the mixture (4), a step for positioning in the tank (2) at least a part of a frame (8) of an element (1), so as to enable said frame to be overmolded by the block (5).

5. Method according to claim 4, **characterized in that** it further comprises the following steps:
- placing the block (5) provided with a frame (8) in a reaction injection mold (22), said frame bearing on said mold when closed so as to define a space (23) between said block and the inner wall (24) of said mold,
- injecting a precursor mixture of elastically compressible polyurethane foam into said space so as to form, after expansion of said mixture, a layer of comfort foam (21) overmoulding said block,
- demoulding the resulting assembly.

6. A cushion (20) manufactured by a method according to any one of the preceding claims, said cushion comprising:
- a padding block (5) molded from a mixture of elastically compressible foam particles (16) and/or recycled fibers, said particles and/or fibers being bonded together by a flexible polyurethane resin, said block having a smoothing layer (15) of flexible polyurethane resin on its surface,
- a cover (14) of coating material placed on said block.
